# EUROPÄISCHE PATENTSCHRIFT

(11) **EP 3 044 292 B1**
(45) Veröffentlichungstag und Bekanntmachung des Hinweises auf die Patenterteilung: **02.01.2019**
(21) Anmeldenummer: 14815216.8
(22) Anmeldetag: 02.09.2014
(51) Int. Cl.: C10J 3/72, C10K 1/00, C10J 3/22, C10K 3/00, C21B 13/00, C21B 13/14

(54) **VERFAHREN UND ANLAGE ZUR VERGASUNG VON KOHLENSTOFFTRÄGERN UND WEITERVERARBEITUNG DES PRODUZIERTEN GASES**
METHOD AND SYSTEM FOR GASIFYING CARBON CARRIERS AND FURTHER TREATING THE PRODUCED GASES
PROCÉDÉ ET INSTALLATION DE VECTEURS CARBONE ET TRAITEMENT ULTÉRIEUR DU GAZ PRODUIT

(30) Priorität: 10.09.2013 DE 102013015019
(43) Veröffentlichungstag der Anmeldung: 20.07.2016
(73) Patentinhaber: Vuletic, Bogdan, 40547 Düsseldorf (DE)
(72) Erfinder: Vuletic, Bogdan, 40547 Düsseldorf (DE)
(74) Vertreter: Hauck Patentanwaltspartnerschaft mbB
(86) Internationale Anmeldenummer: PCT/DE2014/000457
(87) Internationale Veröffentlichungsnummer: WO 2015/035969

(56) Entgegenhaltungen:
- WO-A1-2006/011774
- DE-A1-102006 048 600
- US-A- 5 669 955
- US-A1- 2008 295 647

## Beschreibung

Die Erfindung betrifft ein Verfahren zur Vergasung von Kohlenstoffträgern und eine Anlage zur Durchführung dieses Verfahrens.

Bei Vergasungsanlagen, wie (Lurgi-Prozess, SASOL Südafrika), wird Kohle über den Kopf des Vergasers zugegeben und eine Sauerstoff-Wasserdampf-Mischung über einen Drehrost am unteren Ende des Vergasers zugeführt. Die Anlage läuft unter einem Druck von 25 barg. Die Kohleasche wird vom Drehrost kontinuierlich ausgetragen und über ein Schleusensystem ausgeschleust und das Rohgas vom Kopf des Vergasers abgeführt. Der Vergaser ist als Doppelmantelbehälter ausgeführt und der Zwischenraum ist mit Kühlwasser ausgefüllt, das unter gleichem Druck steht wie der Innenraum des Vergasers. Die Wärmeverluste des Vergasers werden zur Erzeugung von Wasserdampf genutzt, der dem Sauerstoff zugegeben und als Oxidationsmittel verwendet wird. Durch eine sehr niedrige Temperatur im Kopf des Vergasers von etwa 300°C beinhaltet das Gas sehr große Mengen an Teer. Phenolen, Staub und anderen Verunreinigungen, Das Rohgas wird zuerst in einem indirekten Wärmetauscher abgekühlt und anschließend in einem Nasswäscher gewaschen und gekühlt. Weitere Reinigung des Gases erfolgt chemisch bei -40°C mit einer Mischung aus Methylalkohol und Wasser. Dabei wird neben Schwefelwasserstoff und anderen Verunreinigungen auch der Kohlendioxidgehalt des Gases stark reduziert. Der Aufwand für diese Gasreinigung ist enorm und die Verschmutzung der Umwelt so groß, dass solche Anlagen nur in Südafrika, während der Zeit der politischen Isolation, gebaut wurden. Die Analyse des gereinigten Gases hängt von der Zusammensetzung der Kohle ab und weist folgende typische Werte auf: H₂ 55 Vol-%, CO 33 Vol-%, CO₂ 6 Vol-%, Rest N₂ und andere Gase.

Neben einer sehr umfangreichen Aufbereitung des Prozesswassers muss das Abschlämmwasser auch biologisch nachbehandelt werden, da es neben großen Mengen an Teer und Phenolen auch verschiedene andere toxische und umweltproblematische Stoffe beinhaltet. Obwohl das Lurgi-Verfahren in Südafrika weiter entwickelt wurde, wurden keine weiteren Anlagen gebaut.

Bei Erzeugung des Gases aus der Kohle haben sich industriell zwei Verfahren durchgesetzt, bei denen jedoch das Gas ein Neben- und das Roheisen das Hauptprodukt ist. Bei beiden Verfahren, die in der Industrie als Corex- und Finex-Verfahren bekannt sind, wird über 60 % der mit Kohlenstoffträgern eingebrachten thermischen Energie zur Erzeugung von Roheisen und Schlacke verbraucht und weniger als 40 % findet man im Gas wieder. Bei beiden Verfahren ist das Kernaggregat der Anlage der Schmelzvergaser. Unterschiedlich sind praktisch nur die Reaktoren für die Reduktion der Eisenoxide zum Eisenschwamm, in denen das entstaubte, heiße Gas aus dem Schmelzvergaser als Reduktionsmittel verwendet wird. Bei dem Corex-Verfahren erfolgt die Reduktion der Eisenoxide in einem Reduktionsschacht und bei dem Finex-Verfahren in Wirbelschichtreaktoren. Die Verfahren dieser Art sind beispielsweise aus den Patenten DE 36 28 102 A1 und EP 699 107 A1 und EP 699 107 A1 bekannt. Bei beiden Verfahren wird Sauerstoff als Oxidationsmittel über die Düsen in den Schmelzvergaser eingeblasen, um die Reduktionsmittel, überwiegend Kohle und Kohlebriketts, chargiert über den Kopf des Vergasers zu vergasen und die erforderliche Wärme für das Schmelzen des reduzierten Eisens und allen nicht vergasbaren Bestandteilen - inklusive Schlackenbildner (Zuschläge) - zur Verfügung zu stellen. Das produzierte Koppelgas wird nach Vorkühlung und Entstaubung in Heißgaszyklonen, bei dem Corex-Verfahren in ein Reduktionsaggregat und bei dem Finex-Verfahren in den untersten von den drei, in einer Kaskade angeordneten Wirbelschichtreaktoren eingeleitet und dient dort als Reduktionsmittel zur Reduktion der Eisenoxide zum Eisenschwamm. Bei beiden Verfahren übernimmt der Schmelzvergaser die Funktion des unteren und der Reduktionsofen bzw. die Wirbelschichtreaktoren die des oberen Teils des Hochofens.

Aus EP-A-00 14 488, DE-PS 24 23 951.8, DE-PS 25 49 784.1, DE-PS 31 12 708.8 und DE-PS30 42 142 sind auch mehrere Verfahren für Kohlevergasung in Wirbelbett-Gasgeneratoren bekannt. Bei allen diesen Verfahren handelt es sich um sehr komplexe Prozesse und apparativ sehr aufwändige Anlagen. Es gab Anläufe, einfachere Vergasungsverfahren zu Herstellung von Gas zu entwickeln, die wegen verschiedenen, technisch schwer lösbaren Problemen aufgegeben wurden.

Aus der US 2008/0295647 A1 sind ein Verfahren und eine Vorrichtung zur Herstellung von geschmolzenem Eisen bekannt. Hierbei findet ein Schmelzvergaser Verwendung, in dem Eisen erschmolzen wird. In den Schmelzvergaser wird Sauerstoff als Oxidationsmittel eingeführt.

Aus der DE 10 2006 048 600 A1 sind ein Verfahren und eine Vorrichtung zur Herstellung von geschmolzenem Material bekannt. Auch hier findet ein Schmelzvergaser Verwendung, in dem Sauerstoff, Reduktionsmittel und in einem Reduktionsreaktor reduziertes Eisen eingeführt werden, wobei das Reduktionsmittel mit Sauerstoff vergast und durch die entstehende Wärme reduziertes Eisen erschmolzen wird. Als Oxidationsmittel wird in den unteren Bereichen des Schmelzvergasers ein sauerstoffhaltiges Gas eingeführt.

Die WO 2006/011774 A1 betrifft ebenfalls ein Verfahren und eine Vorrichtung zur Herstellung von geschmolzenem Eisen in einem Schmelzvergaser. In den Schmelzvergaser wird O₂ als Oxidationsmittel eingeführt.

Die vorliegende Erfindung bezweckt die Vermeidung der oben aufgeführten Nachteile und Schwierigkeiten und stellt sich die Aufgabe, ein neues, einfaches Verfahren und eine neue Anlage zur Herstellung von Gas überwiegend aus regenerativen und anderen Kohlenstoffträgern mit einem geringen Ascheanteil und/oder aus Kohle zu entwickeln, das bzw. die bei der Roheisenerzeugung einsetzbar ist.

Des Weiteren soll ein Teil der fossilen Kohlenstoffträger bei der Roheisenerzeugung durch regenerative und durch Recyclingkunststoff und Altgummi ersetzt werden können, woraus sich neben wirtschaftlichen auch einige technische Vorteile ergeben.

Es soll auch ein Verfahren bzw. eine Anlage entwickelt werden, bei denen die thermische Energie der regenerativen Kohlenstoffträger besser ausgenutzt wird. Auch der Aufwand für die Reinigung des produzierten Gases und für die Aufbereitung des Prozesswassers sowie die Belastung der Umwelt durch verschiedene toxische Stoffe soll stark reduziert und auf ein Niveau für vergleichbare Verfahren, wie etwa Roheisenerzeugung nach Corex- und Finex-Verfahren oder Hochöfen, gebracht werden.

Diese Aufgabe wird erfindungsgemäß durch ein Verfahren gemäß Patentanspruch 1 und durch eine Anlage gemäß Patentanspruch 8 gelöst.

Erfindungsgemäß wird in einem am Gasaustritt installierten Rohrwärmetauscher das Gas so weit abgekühlt, dass die teigigen, mit dem Gas mitgeführten Aschepartikel erstarren, wodurch die Bildung von Ansätzen in den Nachfolgeapparaten vermieden wird.

Erfindungsgemäß wird zum Aufheizen und Anfahren der Anlage ein heißes sauerstoffhaltiges Verbrennungsgas in den Vergaser eingeblasen. Durch Einblasen eines solchen Gases mit einem niedrigen Sauerstoffgehalt wird das brennbare Gas, wenn im Vergaser vorhanden, kontrolliert verbrannt und dadurch jedes Risiko einer Gasexplosion unterbunden. Erst wenn im Beruhigungsraum die Zündtemperatur der Kohlenstoffträger erreicht ist, wird das Oxidationsmittel zum Vergaser zugegeben und die Anlage angefahren.

Um die Überhitzungen in größeren Bereichen des Charbettes zu vermeiden, wird dem unteren und dem mittleren Bereich des Charbettes, in denen schon entgaste Charpartikel vergast werden, die Sauerstoff/Wasserdampf-Mischung über eine Leitung und in verschiedenen Höhen angebrachte Lanzen zugeführt und dem oberen Bereich des Charbettes, in dem neben Vergasung auch Trocknung und Entgasung der Kohlenstoffträger stattfindet, nur Sauerstoff als Oxidationsmittel beigemischt. Die den verschiedenen Bereichen des Vergasers zugeführten Teilmengen des Oxidationsmittels und deren Zusammensetzung werden in Abhängigkeit vom Heizwert, der Zusammensetzung und der Feuchtigkeit der Kohlenstoffträger eingestellt. Je niedriger der Heizwert und je höher der Feuchtigkeitsgehalt der Kohlenstoffträger, desto höher der Sauerstoffanteil in der Oxidationsmittel-Mischung und umgekehrt.

Erfindungsgemäß werden die den verschiedenen Bereichen des Charbettes zugeführten Teilmengen des Oxidationsmittels und deren Zusammensetzung so eingestellt, dass die Temperaturen im Charbett unterhalb der Schmelztemperatur der Asche liegen. Dadurch und durch eine gute Verteilung des Oxidationsmittels wird die Bildung von größeren Ascheagglomeraten vermieden. Durch Einblasen von Sauerstoff und höhere Temperaturen im Beruhigungsraum des Vergasers werden höhere Kohlenwasserstoffe und Teer zersetzt, bevor das Gas den Vergaser verlässt. Gleichzeitig werden die mit dem Gas aus dem Charbett ausgetragenen Charpartikel vergast, so dass praktisch nur Aschepartikel mit dem Gas aus dem Vergaser ausgetragen werden.

Nach einer weiteren bevorzugten erfindungsgemäßen Variante des Verfahrens werden zur Herstellung des Gases neben regenerativen auch andere Kohlenstoffträger mit einem niedrigen Aschegehalt eingesetzt. Die von Vergasung der Kohlenstoffträger verbleibenden Aschepartikel werden auch mit dem Gas ausgetragen. Eine Austragsvorrichtung ist jedoch vorgesehen, um die angesammelten, unorganischen und metallischen Bestandteile, die mit den Kohlenstoffträgern eingetragen werden, und kleine Ascheagglomerate und Abplatzungen, periodisch austragen zu können. Die anderen Kohlenstoffträger sollen nur dann den regenerativen Kohlenstoffträgern beigemischt werden, wenn das Gas als Reduktionsmittel bei der Roheisenherstellung verwendet wird, sonst ist der Aufwand für Reinigung und Aufbereitung des Gases zu hoch. In dem Falle können die Kohlenstoffträger mit einem höheren Schwefel- oder Chlorgehalt, wie Petrolkoks, Recyclingkunststoff und Altgummi, eingesetzt werden. Die Limitierung für den Einsatz von Petrolkoks ist jedoch sein hoher Schwefelgehalt. Der Vorteil ist sein sehr hoher Heizwert und ein niedriger Preis, so dass beim Einsatz von regenerativen Kohlenstoffträgern mit einem niedrigen Heizwert die Beimischung von Petrolkoks wirtschaftliche Vorteile bringt. Beim Einsatz von Kohlenstoffträgern mit einem höheren Schwefelgehalt wie Petrolkoks oder Kohle wird dem Vergaser Entschwefelungsmittel zugeführt. Die Limitierung für den Einsatz von Recyclingkunststoff ist sein Chlorgehalt.

Erfindungsgemäß ist vorgesehen worden, dass das Oxidationsmittel über viele Lanzen über das gesamte Volumen des Charbettes verteilt wird. Dadurch wird erreicht, dass es nicht zu Überhitzungen größerer Bereiche des Charbettes und zu Bildung von größeren Agglomeraten kommen kann. Die Verteilung des Oxidationsmittels über das gesamte Volumen des Charbettes wird durch die konische Ausführung des unteren Teils des Vergasers und die Anbringung von Lanzen in verschiedenen Höhen des Charbettbereiches bzw. des Vergasers erreicht.

Erfindungsgemäß ist vorgesehen, dass der Kohlendioxidgehalt des Kuppelgases und die Kuppeltemperatur in Abhängigkeit von der Verwendung des Kuppelgases eingestellt werden. Das wird durch Einstellung der Anteile der einzelnen Kohlenstoffträger und des Unterkornanteils in der Kohlenstoffträger-Mischung und durch Einstellung der Verhältnisse Sauerstoff zu Wasserdampf und der einzelnen Teilmengen des Oxidationsmittels zu verschieden Bereichen des Vergasers erreicht.

Bei Verwendung des Gases als Reduktionsmittel bei der Roheisenerzeugung wird ein niedriger Kohlendioxidgehalt und eine niedrige Kuppeltemperatur eingestellt, damit die mit dem Gas, aus dem Vergaser ausgetragenen Partikel auch Kohlenstoff beinhalten. Diese Betriebsverhältnisse werden durch Zuführung vom mehr Oxidationsmittel zum Charbett und weniger zum Beruhigungsraum des Vergasers erreicht. Die mit dem Gas mitgeführten, kohlenstoffhaltigen Partikel werden vor der Zuführung des Gases zu den Reduktionsreaktoren der Roheisenerzeugung, durch Einblasen von Heißluft oder Sauerstoff vergast, wodurch zusätzliches Reduktionsgas erzeugt und das Gas erhitzt wird. Für die Einstellung eines niedrigen Kohlendioxidgehalts des Kuppelgases bei niedrigeren Kuppeltemperaturen ist ein höherer Anteil an energiereicheren Kohlenstoffträgern in der Kohlenstoffträger-Mischung erforderlich. Hierzu ist Petrolkoks besonders geeignet.

Bei der Verwendung des Gases als Reduktionsmittel bei der Roheisenerzeugung ist erfindungsgemäß vorgesehen, dem Gas die Heißluft oder Sauerstoff zuzuführen, um die im Gas vorhandenen unvergasten Charpartikel zu vergasen und Teer zu zersetzen. Bei einem Hochofen erfolgt diese Zuführung, bevor das Gas über mehrere Lanzen oberhalb der Düsenstöcke in den Hochofen eingeblasen wird, bei der Corex-Anlage vor der Zumischung des Reduktionsgases für den Reduktionsschacht und bei der Finex-Anlage vor der Zumischung des Reduktionsgases für den zweiten und den dritten Wirbelschichtreaktor. Die dem Gas zugeführten Heißluft- oder Sauerstoffmengen, bevor es den Reduktionsaggregaten der Roheisenerzeugungsanlagen zugeführt wird, werden so eingestellt, dass fast alle Charpartikel vergast werden. Durch ihre Vergasung wird eine zusätzliche Menge an Reduktionsgas und zusätzliche Wärme produziert und von den Charpartikeln verbleibt nur Asche als Staub. Weniger Staub im Reduktionsgas führt zu einem stabileren Betrieb der Reduktionsreaktoren. Durch Zugabe des aus regenerativen Kohlenstoffträgern, Petrolkoks, Recyclingkunstoff, Altgummi produzierten Gases kann der Koks- bzw. der Kohleverbrauch pro Tonne Roheisen um 10%, reduziert werden. Dadurch wird neben wirtschaftlichen Vorteilen auch der spezifische Ausstoß von Kohlendioxid, produziert aus fossilen Brennstoffen deutlich reduziert. Auch die Aufbereitung von Recyclingkunstoff wird so viel einfacher und billiger als bei der Einblasung in Hochöfen.

Erfindungsgemäß wird der Vergaser in einem großen Leistungsbereich unter einem konstanten Druck betrieben. Die Änderung der thermischen Leistung des Vergasers erfolgt durch Öffnen und Schließen von Absperrventilen für die Zuführung von Oxidationsmittel zu einzelnen Lanzen bzw. Lanzengruppen. Dadurch wird nur die dem Vergaser zugeführte Menge des Oxidationsmittels und der Kohlenstoffträger schrittweise geändert und neben dem Druck bleiben alle anderen Prozessparameter praktisch unverändert. Es werden jedoch nur die Mengen des Oxidationsmittels zu den in Betrieb befindlichen Lanzen der Leistung des Vergasers geringfügig angepasst, um dem, von der Vergaserleistung fast unabhängigen Wärmeverlust des Vergasers, gerecht zu werden. Diese Fahrweise bringt enorme wirtschaftliche und betriebliche Vorteile. Im Falle, dass die Anlage für einen hohen Druck und für den Betrieb der Anlage ohne Kompressoren für die Gasverdichtung ausgelegt ist, kann die Anlage auch bei Reduzierung der Leistung des Vergasers bis auf 25% unter gleichem Druck betrieben werden. Neben einer höheren Verfügbarkeit der Anlage und einer schnelleren Anpassung der Leistung an den Marktbedarf, bringt die Einhaltung von einem konstanten Betriebs- bzw. Gasdruck einen großen betrieblichen Vorteil auch für die Kompressoren für die Gasverdichtung, falls die Anlage für einen niedrigeren Druck ausgelegt ist. Ein weiterer Vorteil dieser Betriebsweise ist eine schnelle und kontrollierbare Änderung der Leistung der Anlage.

Die Erfindung betrifft ferner eine Anlage zur Durchführung des Verfahrens nach einem der Ansprüche 1 bis 7. Die Anlage besitzt einen Vergaser, dem über ein Beschickungs- und Chargiersystem Kohlenstoffträger und über eine Leitung Oxidationsmittel zugeführt werden, wobei das produzierte Gas von der Kuppel des Vergasers über eine Leitung herausgeleitet, abgekühlt und als Reduktionsmittel bei der Roheisenerzeugung verwendet wird. Das Oxidationsmittel verschiedener Zusammensetzung wird kontrolliert den verschiedenen Bereichen des Charbettes und zum Beruhigungsraum des Vergasers zugeführt. Nach der Abkühlung in einem Rohrwärmetauscher wird das Gas den Roheisenerzeugungs-Anlagen zugeführt und als Reduktionsgas verwendet. Vor der Zuführung des Gases zu den Reaktoren der Roheisenerzeugungs-Anlagen wird dem Gas die Heißluft oder Sauerstoff zugegeben, um die kohlenstoffhaltigen Charpartikel zu vergasen. Weiterhin ist zum Aufheizen und Anfahren der Anlage ein Brenner vorgesehen, um eventuelle Gasexplosionen beim Anfahren der Anlage zu vermeiden.

Erfindungsgemäß wird der Wärmetauscher als Rohrwärmetauscher ausgeführt, wobei das Kühlrohr auf der Innenseite der ausgemauerten Wand installiert wird. Die Hauptaufgabe dieses Wärmetauschers ist die Abkühlung und Erstarrung der mit dem Gas ausgetragenen teigigen Aschepartikel, um Ablagerungen in nachgeschalteten Rohrleitungen und Apparaten zu vermeiden. Dieser Wärmetauscher ist so ausgeführt, das die kleineren Ablagerungen durch Temparaturschocks von wassergekühlten Wänden abplatzen.

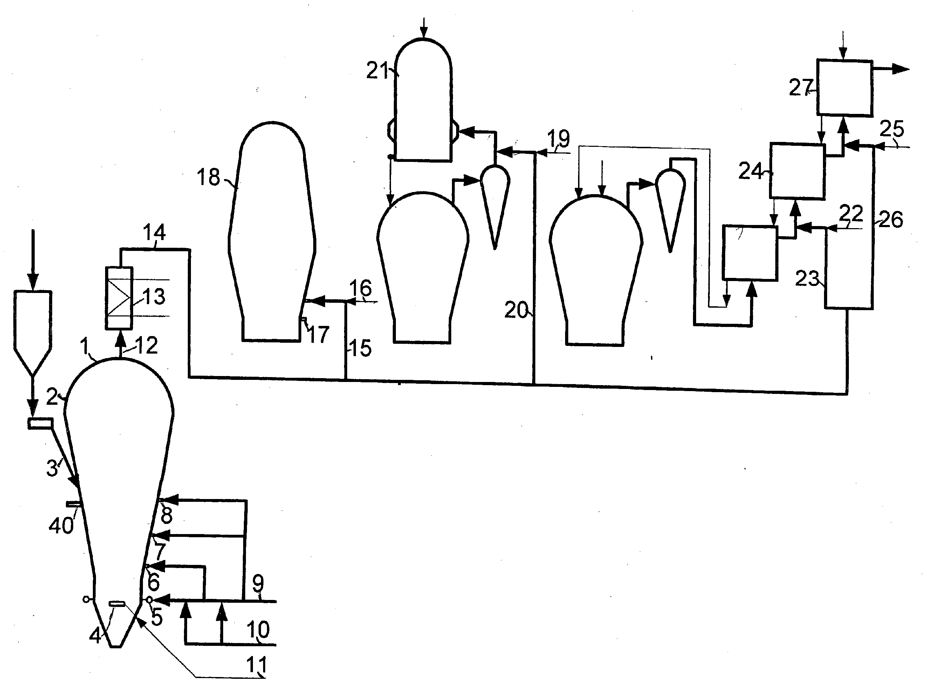

In der nachfolgenden Beschreibung soll die Erfindung anhand eines bevorzugten Ausführungsbeispiels und unter Bezugnahme auf die beigefügte Zeichnung näher erläutet werden.

Die Zugabe der Kohlenstoffträger zum Vergaser 1 erfolgt über ein Beschickungs- und Chargiersystem 2 und eine Leitung 3, installiert an der Seitenwand des Vergasers 1. Die Zugabe der Kohlenstoffträger nahe beim Charbett bringt den Vorteil, dass die kleinen Partikel, die bei Chargieren der Kohlenstoffträger aufgewirbelt werden, ausreichend lange im Beruhigungsraum verweilen, um vergast zu werden. Die Zuführung der Oxidationsmittel erfolgt über Leitungen 9, 10 und 11 und das Herausleiten des produzierten Gases über einen zentral angeordneten Abzug und eine Leitung 12. Der zentral angeordnete Gasabzug sorgt für einen symmetrischen Fluss des Gases durch den Beruhigungsraum des Vergasers 1. Das Gas und die mitgeführten Aschepartikel werden in einem Wärmetauscher 13 abgekühlt, wobei die teigigen Aschepartikel, die zu Ablagerungen in Folgeaggregaten führen können, erstarren. Die kleineren Ablagerungen an der Wand des Wärmetauschers 13, die den Temparaturschocks bei Anfahren der Anlage ausgesetzt sind, platzen von der wassergekühlten Wand ab. Das abgekühlte Gas wird über eine Leitung 14
Roheisenerzeugungsanlagen über Leitungen 15, 20, 23, 26.
zugeführt.

Als Kohlenstoffträger werden grundsätzlich Kohlenstoffträger eingesetzt, die einen sehr geringen Aschegehalt haben. Nach Vergasung von organischen Bestandteilen der eingetragenen Kohlenstoffträger verbleiben nur die feinen Aschepartikel, die mit dem Kuppelgas aus dem Vergaser 1 ausgetragen und im Nasswäscher 30 ausgewaschen werden. Dadurch sind keine Heißgaszyklone für die Abscheidung des Staubes und keine kontinuierliche Austragung der Asche aus dem Vergaser 1 erforderlich. Eine Austragsvorrichtung 11 ist jedoch vorgesehen, um die angesammelten, unorganischen und metallischen Bestandteile, die mit den Kohlenstoffträgern eingetragen werden und kleine Ascheagglomerate und Abplatzungen periodisch austragen zu können. Die Austragsvorrichtung 11 dient gleichzeitig zur Einführung des Oxidationsmittels zum Bodenbereich des Vergasers 1. Dadurch wird bei dieser Ausführungsvariante des Verfahrens der Einsatz von Kohlenstoffträger auf die regenerative und auf die andere Kohlenstoffträgern, die einen geringen Ascheanteil haben, begrenzt.

Das Oxidationsmittel besteht aus einer Mischung von Sauerstoff und Wasserdampf, gegebenenfalls aus einem mit Kohlendioxid angereicherten Gas. Diese Oxidationsmittel, die über separate Leitungen 9, 10, 11 zugeführt werden, werden zum Teil vermischt und zum Teil separat dem Charbett und oberhalb des Charbettes eingeleitet bzw. eingeblasen.

Dem Bodenbereich des Vergasers 1 wird als Oxidationsmittel eine Sauerstoff-Wasserdampf-Mischung über die Leitungen 9 und 10
zugeführt.

Das mit Kohlendioxid angereicherte Gas wird über eine separate Leitung 11 und Lanzen 5 nur dem Bodenbereich des Vergasers 1 zugeführt, um zu vermeiden dass es zur Explosion kommt, falls der Heizwert des kohlendioxidhaltigen Gases ansteigt.

Die Einleitung des Oxidationsmittels zum Bodenbereich erfolgt mit einer niedrigen Geschwindigkeit. Dadurch wird erreicht, dass sich das Charbett in dem Bereich wenig bewegt und mit Asche angereichert wird. Ein geringerer Anteil an Kohlenstoff und relativ kaltes Oxidationsmittel sorgen für niedrigere Temperaturen in diesem Bereich, wodurch die Bildung von Ascheagglomeraten vermieden wird. Auch der Austrag von kälteren unvergasbaren Komponenten wie Sand oder Eisenteilen, die mit Kohlenstoffträgern eingetragen und periodisch ausgetragen werden, wird einfacher.

Dem unteren und dem mittleren Bereich des Charbettes wird eine Sauerstoff-Wasserdampf-Mischung über eine Leitung 4 und Lanzen 5, 6, und dem oberen Bereich des Charbettes nur Sauerstoff als Oxidationsmittel, über Lanzen 7 , zugeführt. Dadurch ist die Möglichkeit gegeben, dass die Temperaturen im Charbett unterhalb der Schmelztemperatur der Asche liegen und dass oberhalb des Charbettes, durch Einblasen von Sauerstoff über Lanzen 8, höhere Temperaturen eingestellt werden.

Die Lanzen 5, 6, 7 für die Einleitung von Oxidationsmittel zum Charbett werden gleichmäßig am Umfang und in verschiedenen Höhen angebracht, um das Oxidationsmittel nicht nur flächenmäßig sondern auch raummäßig optimal zu verteilen.

Auch die Lanzen 8 für die Einleitung von Sauerstoff oberhalb des Charbettes werden gleichmäßig am Umfang des Vergasers angebracht, wodurch ein symmetrisches Temperaturprofil und bessere Bedingungen für die Zersetzung von Teer und Vergasung von Charpartiken im Beruhigungsraum gegeben sind.

Die dem oberen Bereich des Charbettes und dem Beruhigungsraum zugeführten Sauerstoffmengen hängen vom Heizwert und Feuchtigkeitsgehalt der Kohlenstoffträger ab und werden so eingestellt, dass die Sauerstoffmenge zum Beruhigungsraum des Vergasers 1, eingeblasen über die Lanzen 8, in einem bestimmten Verhältnis zur Gesamtmenge des Oxidationsmittels liegt. Eine hohe Menge ist ein Indikator, dass das Charbett kälter ist als es sein sollte. In dem Falle soll die Sauerstoffmenge zum oberen Bereich des Vergasers 1 erhöht werden und umgekehrt.

Nach der Abkühlung im Wärmetauscher 13 kann das Gas als Reduktionsmittel, über Leitungen 15, 20, 23 oder 26 der Roheisenerzeugungs-Anlagen zugeführt werden. Vor dem Einblasen des Gases in die Reduktionsreaktoren 18, 21, 24 und 27 wird dem Gas die Heißluft oder Sauerstoff zugeführt, um die im Gas vorhandenen unvergasten Charpartikel zu vergasen und Teer zu zersetzen. Bei einem Hochofen 18 erfolgt diese Zuführung über eine Leitung 16, bevor das Gas über mehrere Lanzen, oberhalb der Düsenstöcke 17 in den Hochofen eingeblasen wird, bei der Corex-Anlage über eine Leitung 19, vor der Zumischung des Reduktionsgases für den Reduktionsschacht 21 und bei der Finex-Anlage über Leitungen 22 und 25, vor der Zumischung des Reduktionsgases, für den zweiten 24 und den dritten Wirbelschichtreaktor 27. Die dem Gas zugeführten Heißluft- oder Sauerstoffmengen, bevor es den Reduktionsaggregaten der Roheisenerzeugungsanlagen zugeführt wird, werden so eingestellt, dass fast alle Charpartikel vergast werden. Durch ihre Vergasung wird eine zusätzliche Menge von Reduktionsgas und zusätzliche Wärme produziert und von den Charpartikeln verbleibt nur Asche als Staub. Weniger Staub im Reduktionsgas führt zu einem stabileren Betrieb der Reduktionsreaktoren.

Um den Aufwand für weitere Reinigung des Gases gering zu halten, soll sein Teergehalt so niedrig sein wie möglich. Hierzu ist es erforderlich, eine hohe Kuppeltemperatur, einen hohen Oxidationsgrad des Gases und eine ausreichend lange Verweilzeit des Gases im. Beruhigungsraum zu gewährleisten. Gleichzeitig wird erreicht, dass die mit dem Kuppelgas ausgetragenen Partikel kaum organische Bestandteile beinhalten und der im Prozesswasserkreislauf anfallende Schlamm nicht dem Vergaser zurückgeführt werden muss oder anderes verwertet werden.

Für die Reduzierung des Kohlendioxids und von Verunreinigungen des Kuppelgases wird eine PSA (Pressure Swing Adsorption) Anlage 31 installiert. Eine einfache Ausführung, ein relativ geringer Energieaufwand, und eine hohe Verfügbarkeit sind die Vorteile dieses Verfahrens im Vergleich mit einer chemischen Gaswäsche.

In Abhängigkeit der späteren Verwendung wird das Gas weiteren Reinigungsstufen von Schwefelwasserstoff und halogenen Elementen unterzogen.

Für die Entsorgung des mit Kohlendioxid und verschiedenen Verunreinigungen angereicherten Abgases aus der Gasreinigungsanlage 31 werden ein Brenner 35 und eine Mischkammer 36 installiert. Damit das Abgas, das einen sehr niedrigen Heizwert hat, brennen kann, wird über eine Leitung 33, eine Teilmenge des Kuppelgases diesem Abgas beigemischt und im Brenner 35 verbrannt. Das heiße Verbrennungsgas wird dann mit dem Rauchgas aus einem Kraftwerk 32 oder aus einer anderen Anlage, in der Mischkammer 36 im erforderlichen Verhältnis vermischt und als Torrefizierungs- und/oder Trocknungsgas in zumindest einer Anlage 38, eingesetzt.

Die fühlbare Wärme des Kuppelgases wird im Wärmetauscher 13 zur Dampferzeugung genutzt und der Dampf in einem Kraftwerk zur Stromerzeugung verwendet.

Zum Aufheizen und Anfahren des Vergasers 1 wird ein heißes, sauerstoffhaltiges Verbrennungsgas verwendet, um eine kontrollierte Verbrennung vom vorhandenen brennbaren Gas einzuleiten und Explosionen im Vergaser 1 zu unterbinden.

Um den Aufwand für weitere Reinigung des Gases gering zu halten, soll sein Teergehalt so niedrig sein wie möglich. Hierzu ist es erforderlich, eine hohe Kuppeltemperatur, einen hohen Oxidationsgrad des Gases und eine ausreichend lange Verweilzeit des Gases im. Beruhigungsraum zu gewährleisten. Gleichzeitig wird erreicht, dass die mit dem Kuppelgas ausgetragenen Partikel kaum organische Bestandteile beinhalten und der im Prozesswasserkreislauf anfallende Schlamm nicht dem Vergaser zurückgeführt werden muss oder anderes verwertet werden.

Für die Reduzierung des Kohlendioxids und von Verunreinigungen des Kuppelgases wird eine PSA (Pressure Swing Adsorption) Anlage 31 installiert. Eine einfache Ausführung, ein relativ geringer Energieaufwand, und eine hohe Verfügbarkeit sind die Vorteile dieses Verfahrens im Vergleich mit einer chemischen Gaswäsche.

In Abhängigkeit der späteren Verwendung wird das Gas weiteren Reinigungsstufen von Schwefelwasserstoff und halogenen Elementen unterzogen.

Für die Entsorgung des mit Kohlendioxid und verschiedenen Verunreinigungen angereicherten Abgases aus der Gasreinigungsanlage 31 werden ein Brenner 35 und eine Mischkammer 36 installiert. Damit das Abgas, das einen sehr niedrigen Heizwert hat, brennen kann, wird über eine Leitung 33, eine Teilmenge des Kuppelgases diesem Abgas beigemischt und im Brenner 35 verbrannt. Das heiße Verbrennungsgas wird dann mit dem Rauchgas aus einem Kraftwerk 32 oder aus einer anderen Anlage, in der Mischkammer 36 im erforderlichen Verhältnis vermischt und als Torrefizierungs- und/oder Trocknungsgas in zumindest einer Anlage 38, eingesetzt.

Die fühlbare Wärme des Kuppelgases wird in beiden Wärmetauschern 13 und 29 zur Dampferzeugung genutzt und der Dampf in einem Kraftwerk 32 zur Stromerzeugung verwendet.

Zum Aufheizen und Anfahren des Vergasers 1 wird ein heißes, sauerstoffhaltiges Verbrennungsgas verwendet, um eine kontrollierte Verbrennung vom vorhandenen brennbaren Gas einzuleiten und Explosionen im Vergaser 1 zu unterbinden.

## Patentansprüche

1. Verfahren zur Vergasung von Kohlenstoffträgern und Weiterverarbeitung des produzierten Gases, wobei einem Vergaser (1) Kohlenstoffträger zugeführt und durch Einblasung von Oxidationsmittel vergast werden, das produzierte Gas von der Kuppel des Vergasers (1) herausgeleitet, abgekühlt und das abgekühlte Gas als Reduktionsmittel bei der Roheisenerzeugung verwendet wird, wobei im Vergaser (1) aus regenerativen Kohlenstoffträgern, Petrolkoks, Recyclingkunststoff, Altgummi und/oder Kohle unter Zugabe eines Oxidationsmittels ein kohlenmonoxid- und wasserstoffhaltiges Gas hergestellt wird und zum Aufheizen und Anfahren des Vergasers (1) ein heißes sauerstoffhaltiges Verbrennungsgas verwendet wird, wobei der Vergaser ein Charbett aufweist, und wobei dem unteren und dem mittleren Bereich des Charbettes des Vergasers (1) eine Sauerstoff/Wasserdampf-Mischung und dem oberen Bereich des Charbettes nur Sauerstoff als Oxidationsmittel zugeführt werden.

2. Verfahren nach Anspruch 1, **dadurch gekennzeichnet, dass** zur Herstellung des Gases neben regenerativen auch andere Kohlenstoffträger mit einem niedrigen Aschegehalt eingesetzt werden.

3. Verfahren nach einem der vorangehenden Ansprüche, **dadurch gekennzeichnet, dass** das Oxidationsmittel über das gesamte Volumen des Charbettes im Vergaser verteilt wird.

4. Verfahren nach einem der vorangehenden Ansprüche, **dadurch gekennzeichnet, dass** die den verschiedenen Bereichen des Charbettes zugeführten Teilmengen des Oxidationsmittels und deren Zusammensetzung so eingestellt werden, dass die Temperaturen im Charbett unterhalb der Schmelztemperatur der Asche liegen, und oberhalb des Charbettes höhere Temperaturen eingestellt werden.

5. Verfahren nach einem der vorangehenden Ansprüche, **dadurch gekennzeichnet, dass** bei Verwendung des Gases als Reduktionsmittel bei der Roheisenerzeugung ein niedriger Kohlendioxidgehalt und eine niedrigere Kuppeltemperatur aufrechterhalten werden.

6. Verfahren nach einem der vorangehenden Ansprüche, **dadurch gekennzeichnet, dass** dem Gas nach der Vergasung Heißluft oder Sauerstoff zugeführt wird, bevor es als Reduktionsmittel bei der Roheisenerzeugung verwendet wird.

7. Verfahren nach einem der vorangehenden Ansprüche, **dadurch gekennzeichnet, dass** der Vergaser (1) unter einem konstanten Druck unabhängig von der Leistung betrieben wird.

8. Anlage zur Durchführung des Verfahrens nach einem der Ansprüche 1 bis 7 mit einem Vergaser (1), dem über ein Beschickungs- und Chargiersystem (2) Kohlenstoffträger und über eine Leitung (9) Oxidationsmittel zugeführt werden, wobei das produzierte Gas von der Kuppel des Vergasers (1) über eine Leitung (12) herausgeleitet und als Reduktionsmittel bei der Roheisenerzeugung verwendet wird, wobei der Vergaser ein Charbett aufweist, die Anlage weiter mit Leitungen (4) und Lanzen (5, 6, 7, 8) für die Zuführung von verschiedenen Teilmengen des Oxidationsmittels mit verschiedener Zusammensetzung zu verschiedenen Bereichen des Charbettes im Vergaser (1) und zum Beruhigungsraum des Vergasers (1), einem dem Vergaser (1) nachgeordneten Wärmetauscher (13) zur Abkühlung des produzierten Gases und mindestens einem Brenner (39) zum Aufheizen und Anfahren der Anlage, wobei die Leitungen (4) und Lanzen (5, 6, 7, 8) so angeordnet und ausgebildet sind, dass dem unteren und dem mittleren Bereich des Charbettes des Vergasers (1) eine Sauerstoff/Wasserdampf-Mischung und dem oberen Bereich des Charbettes nur Sauerstoff als Oxidationsmittel zugeführt werden.

9. Anlage nach Anspruch 8, **dadurch gekennzeichnet, dass** der Wärmetauscher (13) als Rohrwärmetauscher ausgeführt ist, wobei das Kühlrohr auf der Innenseite einer Wand installiert ist.

10. Anlage nach Anspruch 8 oder 9, **dadurch gekennzeichnet, dass** sie zumindest eine Leitung (16, 19, 22, 25) für die Zuführung von Heißluft oder Gas zum produzierten Gas, bevor dieses als Reduktionsmittel bei der Roheisenerzeugung verwendet wird, umfasst.

## Claims

1. A method of gasifying carbon carriers and further treating the produced gases wherein carbon carriers are supplied to a gasifier (1) and are gasified by blowing in oxidizing agents, the produced gas is removed from the dome of the gasifier (1), is cooled and the cooled gas is used as reducing agent in the pig iron production wherein a carbon monoxide-containing and hydrogen-containing gas is produced in the gasifier (1) from regenerative carbon carriers, petrol coke, recycling plastic, scrap rubber and/or coal with the addition of an oxidizing agent, and a hot oxygen-containing combustion gas is used for heating and starting the gasifier (1) wherein the gasifier has a char bed and wherein an oxygen/water vapour mixture is supplied to the lower and the middle range of the char bed of the gasifier (1) and only oxygen as oxidizing agent is supplied to the upper range of the char bed.

2. The method according to claim 1, **characterised in that** in addition to regenerative carbon carriers also other carbon carriers having a low content of ashes are used for the production of the gas.

3. The method according to one of the preceding claims, **characterised in that** the oxidizing agent is distributed over the whole volume of the char bed in the gasifier.

4. The method according to one of the preceding claims, **characterised in that** the part-amounts of the oxidizing agent supplied to the different portions of the char bed and their composition are adjusted in such a manner that the temperatures in the char bed are below the melting temperature of the ashes and that higher temperatures are adjusted above the char bed.

5. The method according to one of the preceding claims, **characterised in that** a low carbon dioxide content and a lower dome temperature are maintained when using the gas as reducing agent in the pig iron production.

6. The method according to one of the preceding claims, **characterised in that** hot air or oxygen is supplied to the gas after the gasification before it is used as reducing agent in the pig iron production.

7. The method according to one of the preceding claims, **characterised in that** the gasifier (1) is operated at a constant pressure independently of the output.

8. A plant for carrying out the method according to one of the claims 1 to 7 comprising a gasifier (1) which is supplied with carbon carriers through a supplying and charging system (2) and which is supplied with oxidizing agent by means of a line (9) wherein the produced gas is discharged from the dome of the gasifier (1) by means of a line (12) and is used as reducing agent in the pig iron production wherein the gasifier has a char bed and wherein the plant is further provided with lines (4) and lances (5, 6, 7, 8) for supplying several part-amounts of the oxidizing agent with different composition to several ranges of the char bed in the gasifier (1) and to the appeasing room of the gasifier (1), a heat exchanger (13) arranged behind the gasifier (1) for cooling the produced gas and at least one burner (39) for heating and starting the plant wherein the lines (4) and lances (5, 6, 7, 8) are arranged and formed in such a manner that an oxygen/water vapour mixture is supplied to the lower and the middle portion of the char bed and only oxygen as oxidizing agent is supplied to the upper portion of the char bed.

9. The plant according to claim 8, **characterised in that** the heat exchanger (13) is designed as tube heat exchanger wherein the cooling tube is installed on the inner side of a wall.

10. The plant according to claim 8 or 9, **characterised in that** it includes at least one line (16, 19, 22, 25) for supplying hot air or gas to the produced gas before the same is used as reducing agent in the pig iron production.

## Revendications

1. Procédé servant à gazéifier des supports de carbone et servant à traiter ultérieurement le gaz produit, dans lequel des supports de carbone sont amenés au gazéificateur (1) et sont gazéifiés en soufflant un agent d'oxydation, le gaz produit est conduit hors de la coupole du gazéificateur (1), est refroidi et le gaz refroidi est utilisé en tant qu'agent de réduction lors de la production de fonte brute, dans lequel un gaz contenant du monoxyde de carbone et de l'hydrogène est fabriqué dans le gazéificateur (1) à partir de supports de carbone régénératifs, de cokes de pétrole, d'une matière synthétique de recyclage, de caoutchouc usagé et/ou de charbon en ajoutant un agent d'oxydation et un gaz de combustion chaud contenant de l'oxygène est utilisé pour chauffer et faire démarrer le gazéificateur (1), dans lequel le gazéificateur présente un lit de charbon carbonisé, et dans lequel un mélange d'oxygène et de vapeur d'eau est amené à la zone inférieure et à la zone centrale du lit de charbon carbonisé du gazéificateur (1) et seulement de l'oxygène est amené en tant qu'agent d'oxydation à la zone supérieure du lit de charbon carbonisé.

2. Procédé selon la revendication 1, **caractérisé en ce que** sont utilisés en parallèle des supports de carbone régénératifs également d'autres supports de carbone présentant une faible teneur en cendres pour fabriquer le gaz.

3. Procédé selon l'une quelconque des revendications précédentes, **caractérisé en ce que** l'agent d'oxydation est réparti sur l'ensemble du volume du lit de charbon carbonisé dans le gazéificateur.

4. Procédé selon l'une quelconque des revendications précédentes, **caractérisé en ce que** les quantités partielles, amenées aux différentes zones du lit de charbon carbonisé, de l'agent d'oxydation et sa composition sont réglées de telle sorte que les températures dans le lit de charbon carbonisé sont inférieures à la température de fusion des cendres et des températures plus élevées sont réglées au-dessus du lit de charbon carbonisé.

5. Procédé selon l'une quelconque des revendications précédentes, **caractérisé en ce qu'**une faible teneur en dioxyde de carbone et une faible température de coupole sont conservées lors de l'utilisation du gaz en tant qu'agent de réduction lors de la production de fonte brute.

6. Procédé selon l'une quelconque des revendications précédentes, **caractérisé en ce que** de l'air chaud ou de l'oxygène sont amenés au gaz après la gazéification, avant qu'il ne soit utilisé en tant qu'agent de réduction lors de la production de fonte brute.

7. Procédé selon l'une quelconque des revendications précédentes, **caractérisé en ce que** le gazéificateur (1) fonctionne à une pression constante indépendamment de la puissance.

8. Installation servant à mettre en oeuvre le procédé selon l'une quelconque des revendications 1 à 7 avec un gazéificateur (1), auquel sont amenés des supports de carbone par l'intermédiaire d'un système de chargement (2) et des agents d'oxydation par l'intermédiaire d'un conduit (9), dans laquelle le gaz produit est conduit hors de la coupole du gazéificateur (1) par l'intermédiaire d'un conduit (12) et est utilisé en tant qu'agent de réduction lors de la production de fonte brute, dans laquelle le gazéificateur présente un lit de charbon carbonisé, avec par ailleurs des conduits (4) et des lances (5, 6, 7, 8) pour l'amenée de différentes quantités partielles de l'agent d'oxydation avec une composition différente à des zones différentes du lit de charbon carbonisé dans le gazéificateur (1) et à un espace de stabilisation du gazéificateur (1), un échangeur de chaleur (13) disposé en aval du gazéificateur (1) servant à refroidir le gaz produit, et au moins un brûleur (39) servant à chauffer et à démarrer l'installation, dans laquelle les conduits (4) et les lances (5, 6, 7, 8) sont disposés et réalisés de telle sorte qu'un mélange d'oxygène/vapeur d'eau est amené à la zone inférieure et à la zone centrale du lit de charbon carbonisé du gazéificateur (1) et seulement de l'oxygène est amené en tant qu'agent d'oxydation à la zone supérieure du lit de charbon carbonisé.

9. Installation selon la revendication 8, **caractérisée en ce que** l'échangeur de chaleur (13) est réalisé sous la forme d'un échangeur de chaleur tubulaire, dans laquelle le tuyau de refroidissement est installé sur le côté intérieur d'une paroi.

10. Installation selon la revendication 8 ou 9, **caractérisée en ce qu'**elle comprend au moins un conduit (16, 19, 22, 25) pour l'amenée d'air chaud ou de gaz au gaz produit, avant que ce dernier ne soit utilisé en tant qu'agent de réduction lors de la production de fonte brute.
